# EUROPEAN PATENT APPLICATION

(11) **EP 4 610 711 A1**
(43) Date of publication of application: **03.09.2025**
(21) Application number: 24160808.2
(22) Date of filing: 01.03.2024
(51) Int. Cl.: G02B 21/34, G02B 21/02, G02B 21/32, G02B 21/33, G01N 35/00

(54) **IMAGING DEVICE AND BIOLOGICAL SAMPLE PROCESSING ARRANGEMENT**

(71) Applicant: Leica Biosystems Nussloch GmbH, 69226 Nussloch (DE)
(72) Inventor: Gross, Stefanie, 68167 Mannheim (DE); Ulbrich, Hermann, 76669 Bad Schönborn-Mingolsheim (DE)
(74) Representative: Schaumburg und Partner Patentanwälte mbB

(57) **Abstract**

In a first aspect, an imaging device (100, 200) for imaging biological samples (110) is provided. The imaging device (100, 200) comprises an optical system (102) for imaging a biological sample (110) arranged on a sample carrier (108) and a liquid container (104) at least partially filled with an imaging reagent (106). A focus plane of the optical system (102), in particular of an objective (112) of the optical system (102), is arranged in the liquid container (104). In a further aspect, a biological sample processing arrangement (300) comprising the imaging device (100, 200) is provided.

## Description

### Technical field

The invention relates to an imaging device for imaging biological samples. In a further aspect a biological sample processing arrangement comprising the imaging device is provided.

### Background

The preparation, imaging, and archiving of biological samples often happen under significant time pressure. For example, in research or clinical settings, rapid turnaround times are essential to provide timely information to decision makers. In particular in histopathology, efficient processing according to strict protocols is necessary. Any delays in sample preparation can cascade down the workflow, impacting subsequent stages such as imaging and analysis, and ultimately delay decision making. For example, the requirement to prepare samples such that they are sufficiently conserved for long-term archiving regularly requires days and may delay subsequent imaging steps. At the same time, degradation of biological samples such as tissue sections during processing needs to be reduced or prevented to ensure the fidelity of cellular structures.

### Summary

It is an object to provide an imaging device for imaging biological samples that enables rapidly processing and imaging of biological samples, in particular for biological samples that require archiving with high fidelity.

The aforementioned object is achieved by the subject-matter of the independent claims. Advantageous embodiments are defined in the dependent claims and the following description.

In a first aspect, an imaging device for imaging biological samples is provided. The imaging device comprises an optical system for imaging a biological sample arranged on a sample carrier and a liquid container at least partially filled with an imaging reagent. A focus plane of the optical system, in particular of an objective of the optical system, is arranged in the liquid container.

The imaging device enables efficient imaging of the biological samples whilst maintaining their fidelity. In particular, the method enables imaging of biological samples that have not been contacted with a mounting reagent for conserving and archiving of the biological sample.

As an example, the biological sample may be a tissue section generated from a tissue sample such as a biopsy. The biological sample may be generated as a tissue section by means of a microtome, for example. The generated biological sample may be provided on the sample carrier and preferably remain on that sample carrier whilst imaging by means of the imaging device. The sample carrier may be a (glass) microscope slide, for example. In an alternative, the sample carrier may be a foil. The sample carrier is preferably transparent in order to enable imaging of the biological sample.

The liquid container is preferably configured to receive the sample carrier. Thus, the sample carrier with the biological sample may be placed in the liquid container.

In particular, the imaging reagent is a liquid. Preferably, the imaging reagent has a refractive index that is similar to at least one of water, the material of the sample carrier, and the material of a front lens of the optical system of the imaging device. The imaging reagent may be ethanol or xylene, for example.

For imaging of the biological sample, the sample carrier with the biological sample may be arranged in an imaging position in the liquid container. In particular, the biological sample may be placed at least partially in the focus plane of the optical system. A corresponding imaging plane of the optical system may be arranged on a detector surface in order to image the biological sample in the focus plane. In a particular embodiment, the optical system may comprise a detector with the detector surface. In addition, an illumination source may be provided in order to illuminate the biological sample during imaging.

The focus plane may have a finite expanse or be a (finite) focus area, within which the biological sample may be imaged. Preferably, the space between the focus plane and the optical system is filled with the imaging reagent.

In a preferred embodiment, the imaging device may be a microscope comprising the liquid container.

Preferably, the optical system is at least partially arranged in the liquid container. This enables filling the space between the optical system and the biological sample in the focus plane with the imaging reagent. For example, an objective of the optical system may be arranged in the liquid container. In particular, at least a front lens of the optical system is arranged in the liquid container and in contact with the imaging reagent. Thus, the optical system may be at least partially submerged in the imaging reagent within the liquid container.

Preferably, the focus plane is arranged essentially parallel to a surface of the imaging reagent in the liquid container. This enables arranging the sample carrier in parallel to the surface of the imaging reagent for imaging. In this case, at least one side of the sample carrier is in contact with the imaging reagent when imaging the biological sample, in particular the side of the sample carrier, on which the biological sample is arranged. The surface of liquid may form due to gravity and surface tension between side walls of the liquid container. In particular in this case, the optical system may preferably be an inverse microscope. Thus, the optical system may at least partially be arranged below the liquid container.

Preferably, the focus plane is arranged essentially perpendicular to a surface of the imaging reagent in the liquid container. This enables arranging the sample carrier perpendicular to the surface of the imaging reagent for imaging. In this case, several sides of the sample carrier are submerged in the imaging reagent when imaging the biological sample, including the side of the sample carrier, on which the biological sample is arranged.

Preferably, the liquid container has an opening for receiving the sample carrier with the biological sample. This enables easily arranging the sample carrier with the biological sample in the imaging reagent. In particular, the opening of the liquid container is for inserting the sample carrier into the inside of the liquid container and submerging the sample carrier at least partially into the imaging reagent.

Preferably, the liquid container comprises an outlet for draining the imaging reagent from the liquid container. This enables easy draining and replacing of the imaging reagent in the liquid container. The liquid container may further comprise a valve to regulate the flow through the opening. The imaging reagent may be drained by gravity, for example. Draining of the imaging reagent may be required in case the imaging reagent is contaminated.

Preferably, the optical system has a magnification in a range between five to a hundred times, in particular in a range between five and forty times. This enables generating detailed images of the biological sample.

Preferably, the optical system is configured to move the focus plane relative to the sample carrier, specifically relative to the biological sample. This enables efficiently generating detailed and focussed images of the biological sample. The focus plane may be moved in a direction of the focus plane and/or a direction perpendicular to the focus plane. Specifically, parts of the optical system may be moved in along the biological sample in order to subsequently image several parts of the biological sample. This may also be referred to as scanning the biological sample.

Preferably, the imaging device comprises an alignment element configured to move the sample carrier relative to the focus plane. This enables efficiently generating detailed and focussed images of the biological sample. The sample carrier may be moved in a direction of the focus plane and/or a direction perpendicular to the focus plane.

In a further aspect a biological sample processing arrangement is provided comprising: the imaging device describe above and configured to image a biological sample arranged on a sample carrier. The biological sample processing arrangement further comprises a covering device for covering the biological sample on the sample carrier with a covering element. The covering device is configured to receive the sample carrier with the biological sample from the imaging device.

The imaging device as well as the biological sample processing arrangement enable efficiently imaging and preferably archiving of the biological sample. This is of particular importance for pathological, in particular histopathological, analyses of biological samples. In these cases, it is particularly desirable to reduce the time from providing the biological sample to imaging the biological sample. The biological sample can then be analysed based on a generated image of the biological sample.

At the same time, in the context of pathological analyses it is generally a requirement to archive biological samples, for example for ten years. This step of archiving generally includes covering the biological sample on the sample carrier with a covering element, for example a cover glass, by means of a covering device. Thus, the covering device may be configured to arrange the covering element on the sample carrier and the biological sample, in particular, such that the biological sample is arranged between the sample carrier and the covering element.

The covering device may additionally be configured to contact the biological sample with a mounting reagent. The mounting reagent is suitable for conservation and long-term archival storage of the biological sample, in particular. Specifically, for storage of ten years. Thus, the biological sample is sealed within the mounting reagent. For example, the mounting reagent may be xylene based. Contacting the biological sample with the mounting reagent takes considerable time, for example it may take two days for the mounting reagent to set or cure. In this time no other processing of the biological sample is possible.

A further requirement in the context of processing biological samples for pathological analyses is a consistent quality and reproducibility. Thus, prolonged analyses times or steps prior to covering the biological sample are generally not possible to avoid compromising the biological sample, for example due to drying out. The drying out may distort the biological sample or generate undesirable artifacts in a generated image of the biological sample.

However, the imaging device as well as the biological sample processing arrangement do enable imaging without compromising the biological sample prior to covering the biological sample by imaging the biological sample in an imaging reagent. This avoids drying of the biological sample. Further, by imaging the biological sample without a covering element the risk of optical aberrations is reduced. The biological sample process arrangement enables that only after imaging is the biological sample covered with a covering element and optionally contacted with a mounting reagent in order to preserve the biological sample for long-term archival storage. Thus, first imaging the biological sample in the imaging reagent and then covering the biological sample with a covering element preserves the fidelity of the biological sample for imaging.

Preferably, the biological sample processing arrangement further comprises a staining device for staining the biological sample. For example, the staining device may be configured to contact the biological sample with at least one staining reagent. This enables a detailed analysis of the biological sample.

Preferably, the imaging device is configured to receive the sample carrier with the biological sample from the staining device. Thus, the biological sample is first stained and then imaged. This enables a detailed analysis of the biological sample.

The at least one staining reagent may be a liquid, in particular an aqueous solution. The biological sample may be contacted with the at least one staining reagent by means of a staining device. Preferably, the biological sample is in contact with or submerged in the at least one staining reagent in the staining device.

Preferably, the imaging reagent is miscible in the staining reagent. This enables generating high quality images of the biological samples. In particular, fluids or liquids are miscible when they form a homogeneous mixture or solution.

Preferably, the mounting reagent is miscible in the imaging reagent. This enables efficient conservation of the biological sample when covering the biological sample.

Preferably, at least the imaging device and the covering device are configured to transfer a transfer container between each other. This enables rapid and safe transfer of the sample carrier with the biological sample between the imaging device and the covering device. In particular, the transfer container is configured to hold the sample carrier with the biological device with at least the biological sample submerged in a liquid, for example the imaging reagent or the mounting reagent. Preferably, the transfer container may hold a plurality of sample carriers. Additionally, the staining device and the imaging device may be configured to transfer a transfer container between each other.

Preferably, the biological sample processing arrangement comprises the transfer container.

The biological sample processing arrangement has the same advantages as the imaging device. Further, the biological sample processing arrangement may be supplemented with the features of the imaging device described in this document, in particular, the features of the dependent claims of the imaging device.

In particular, the biological sample processing arrangement may be configured to carry out a method for imaging biological samples. The method may comprise the following steps: a) providing a biological sample on a sample carrier; b) contacting the biological sample with an imaging reagent; c) imaging the biological sample, whilst the biological sample is in contact with the imaging reagent; and d) contacting the biological sample with a mounting reagent.

### Short Description of the Figures

Hereinafter, specific embodiments are described referring to the drawings, wherein:
- Figure 1: is a schematic view of an imaging device,
- Figure 2: is a schematic view of an imaging device according to a further embodiment,
- Figure 3: is a schematic view of a biological sample processing arrangement,
- Figure 4: is a flow chart of a method for imaging biological samples, and
- Figure 5: is a flow chart of a method for imaging biological samples according to a further embodiment.

### Detailed Description

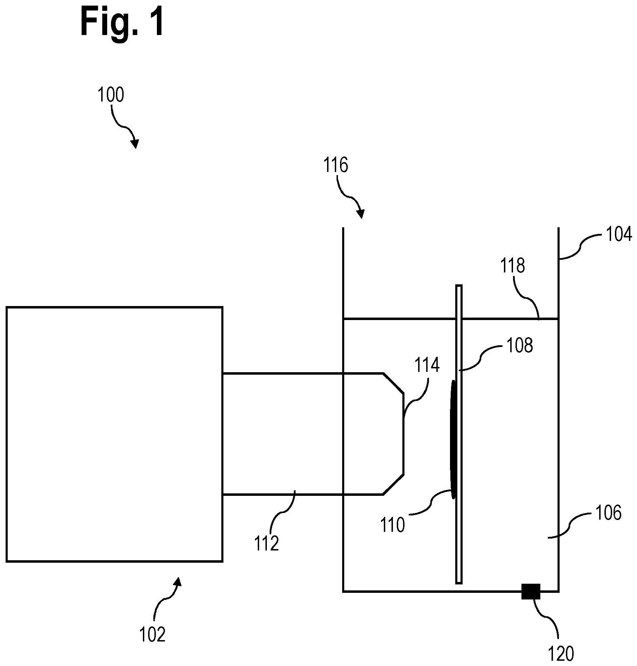

Figure 1 is a schematic side view of an imaging device 100 for imaging biological samples. The imaging device 100 comprises an optical system 102 and a liquid container 104.

The liquid container 104 is partially filled with an imaging reagent 106. A sample carrier 108 is arranged in the liquid container 104. In particular, the sample carrier 108 is partially submerged in the imaging reagent 106. The sample carrier 108 may be a microscope slide and may be made of glass, for example. In an alternative embodiment the sample carrier 108 may be a (flexible) foil.

A biological sample 110 is arranged on the sample carrier 108. In particular, the biological sample 110 is arranged or fixed on a side of the sample carrier 108 that faces the optical system 102.

The optical system 102 is configured to image the biological sample 110. To that end, a focus plane of the optical system 102 is arranged in the liquid container 104, in particular in the imaging reagent 106. The optical system 102 is configured to image the focus plane onto a corresponding imaging plane. The optical system 102 may comprise a detector with a detector surface that is aligned with the imaging plane. The detector may be configured to generate imaging data. When the biological sample 110 is arranged at least partially in the focus plane, the biological sample 110 may be imaged by means of the optical system 102. The optical system 102 may further comprise an illumination source to illuminate the biological sample 110 during imaging.

The optical system 102 may be at least partially arranged in the liquid container 104, in particular in the imaging reagent 106. Specifically, the optical system 102 may comprise an objective 112 that is partially arranged in the imaging reagent 106. At least a front lens 114 of the objective 112 may be in contact with the imaging reagent 106 inside the liquid container 104. The front lens 114 is orientated in the direction of the biological sample 110 such that light originating from the biological sample 110 may be captured by the front lens 114.

The sample carrier 108 with the biological sample 110 may be moved into and out of the liquid container 104, for example by means of an alignment element (not shown) of the imaging device. The alignment element may further be configured to align the sample carrier 108, in particular the biological sample 110, relative to the optical system 102. In order to move the sample carrier 108 into and out of the liquid container 104, the liquid container 104 may have an opening 116 through which the sample carrier 108 may be moved.

Alternatively or in addition, the optical system 102, in particular the objective 112, may be configured to be moved relative to the sample carrier 108 in the liquid container 104.

The focus plane of the optical system 102 of the imaging device 100 is arranged essentially perpendicular to a surface 118 of the imaging reagent 106 in the liquid container 104. When the sample carrier 108 is arranged in the imaging reagent 106 and the biological sample 110 is in the focus plane of the optical system 102, the sample carrier 108 is in an imaging position. In this imaging position in the imaging device 100, the sample carrier 108 is similarly arranged perpendicular to the surface 118 of the imaging reagent 106.

The relative movement of the optical system 102 and the sample carrier 108 to each other enables improved focusing of the biological sample 110 during imaging. Further, several areas of the biological sample 110 may be subsequently imaged by moving the optical system 102 and the sample carrier 108 relative to each other. This may be referred to as scanning the biological sample 110.

In a particular embodiment, the imaging device 100 may be a microscope comprising the optical system 102 and the liquid container 104.

Preferably, the space between the biological sample 110 and the front lens 114 of optical system 102 is filled with the imaging reagent 106.

The imaging reagent 106 preferably has a refractive index that is similar to at least one of water, the material of the sample carrier 108, and the material of the front lens 114 of the optical system 102 of the imaging device. This may reduce aberrations when imaging the biological sample 110.

The imaging reagent 106 is a liquid, in particular an organic solvent. Examples of the imaging reagent 106 include ethanol or xylene.

The liquid container 104 may optionally comprise an outlet 120 for draining the imaging reagent 106 from the liquid container. The outlet may comprise a valve for selectively opening and closing the outlet 120.

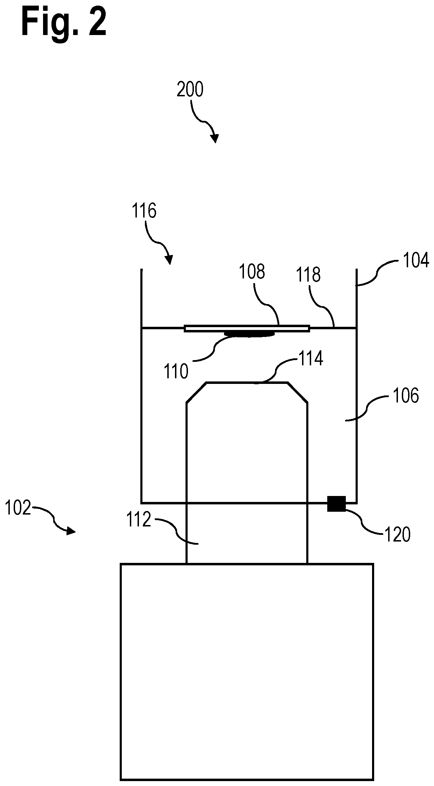

Figure 2 is a schematic side view of an imaging device 200 for imaging biological samples. The imaging device 200 comprises the optical system 102 and the liquid container 104, as described above. In contrast to the imaging device 100, the imaging device 200 comprises the optical system 102 and the liquid container 104 arranged differently to each other. Specifically, for the imaging device 200 the focus plane of the optical system 102 is arranged parallel to the surface of the imaging reagent 106 in the liquid container 104. In this case, the optical system 102, in particular the objective 112, may be arranged below the liquid container 104.

In a particular embodiment, the imaging device 200 may be an inverse microscope comprising the optical system 102 and the liquid container 104.

At least one side of the sample carrier 108 may be in contact with the imaging reagent 106 when the sample carrier 108 is in an imaging position within the liquid container 104. In this imaging position the biological sample 110 is at least partially in the focus plane of the optical system 102 of the imaging device 200. When the sample carrier 108 is in the imaging position in the imaging device 200, the sample carrier 108 is arranged essentially parallel to the surface 118 of the imaging reagent 106.

Alternatively, the focus plane of the optical system 102 may be arranged in the liquid container of the imaging device 200 such that the sample carrier 108 is entirely submerged in the imaging reagent 106 when the biological sample is in the focus plane.

The biological sample 110 is arranged or fixed on a side of the sample carrier 108 that is orientated towards the front lens 114 of the optical system 102, when the sample carrier 108 is in the imaging position. Further, the biological sample 110 is arranged or fixed on a side of the sample carrier 108 that is in contact with the imaging reagent 106. Thus, the space between the biological sample 110 and at least the front lens 114 of the optical system 102 is filled with the imaging reagent 106.

Both imaging devices 100, 200 enable imaging of the biological sample 110 on the sample carrier 108 whilst the biological sample 110 is submerged in the imaging reagent. This avoids the biological sample 110 drying out and enables imaging the biological sample 110 with high fidelity.

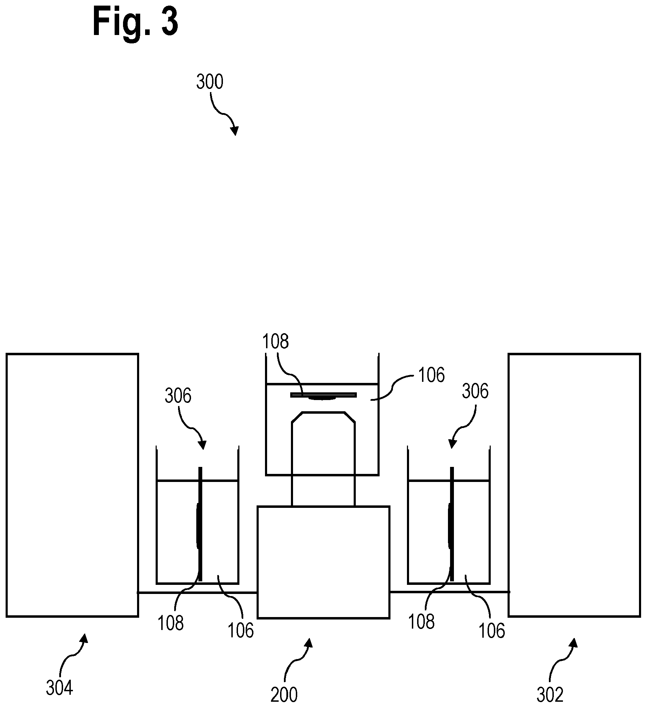

Figure 3 is a schematic side view of a biological sample processing arrangement 300. The biological sample processing arrangement 300 comprises the imaging device 200 and a covering device 302. Optionally, the processing arrangement 300 comprises a staining device 304.

In an alternative, the processing arrangement 300 may comprise the imaging device 100 instead of the imaging device 200.

The covering device 302 is configured to cover the biological sample 110 on the sample carrier 108 with a covering element. The covering element may be a cover glass, for example. Optionally, the covering device may additionally be configured to contact the biological sample 110 on the sample carrier 108 with a mounting reagent. The mounting reagent is preferably miscible in the imaging reagent. For example, the mounting reagent may be xylene based.

In particular, the covering device 302 may place the covering element on the sample carrier 108 such that the biological sample 110 is arranged between the covering element and the sample carrier 108. Prior to that the biological sample 110 may be contacted with the mounting reagent in order to conserve the biological sample 110. This enables long-term archival storage of the biological sample 110 on the sample carrier 108. The covering device 302 may also be termed a coverslipper.

The covering device 302 is configured to receive the sample carrier 108 with the biological sample 110 from the imaging device 200. Thus, the biological sample 110 is first imaged by means of the imaging device 200 and then covered by means of the covering device 302.

The staining device 304 is configured to stain the biological sample 110 on the sample carrier 108, for example, by contacting the biological sample 110 with at least one staining reagent. The staining device may comprise fluid handling elements by means of which the staining reagent may be contacted with the biological sample 110.

Optionally, the biological sample processing arrangement 300 may additionally comprise at least one transfer container 306. At least two of the imaging device 200, the covering device 302 and the staining device 304 may be configured to transfer the transfer container 306 between each other. The transfer container 306 is filled with a liquid, preferably the imaging reagent 106. The transfer container 306 may receive the sample carrier 108 and the sample carrier 108 may be transferred between at least two of the imaging device 200, the covering device 302 and the staining device 304. During the transfer, the biological sample 110 on the sample carrier 108 is submerged in the imaging reagent 106 in the transfer container 306. This prevents the biological sample 110 drying out when being processed in the processing arrangement 300.

The biological sample processing arrangement 300 may process several sample carriers 108 with different biological samples 110 at the same time. For example, several biological samples 110 may initially be stained in the staining device 304 and then transferred into the transfer container 306. The biological samples 110 may then be transferred simultaneously to the imaging device 200 by means of the transfer container 306. In the imaging device 200, the biological samples 110 may be transferred to the liquid container 104 for imaging one after the other. The biological samples 110 may then be transferred to the covering device 302 by means of the transfer container 306.

The biological sample processing arrangement 300 enables rapid imaging of biological samples 110. Only after the imaging, the biological samples 110 are covered by a covering element and prepared for archival storage.

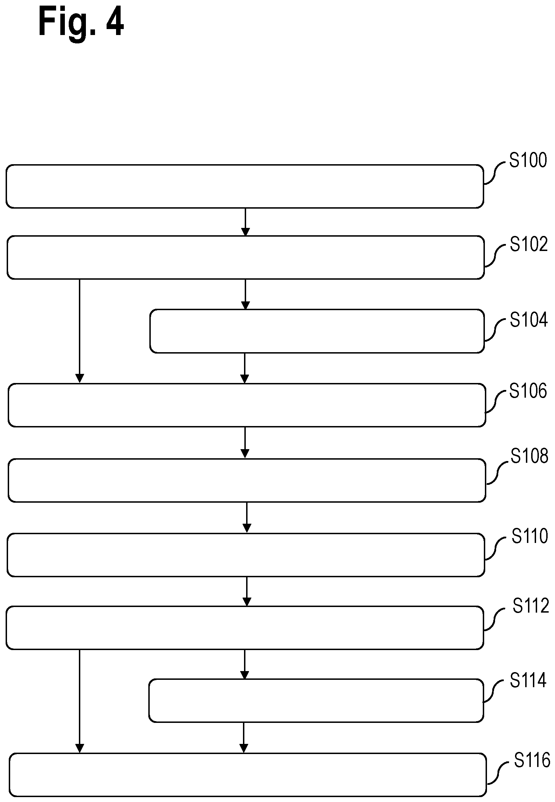

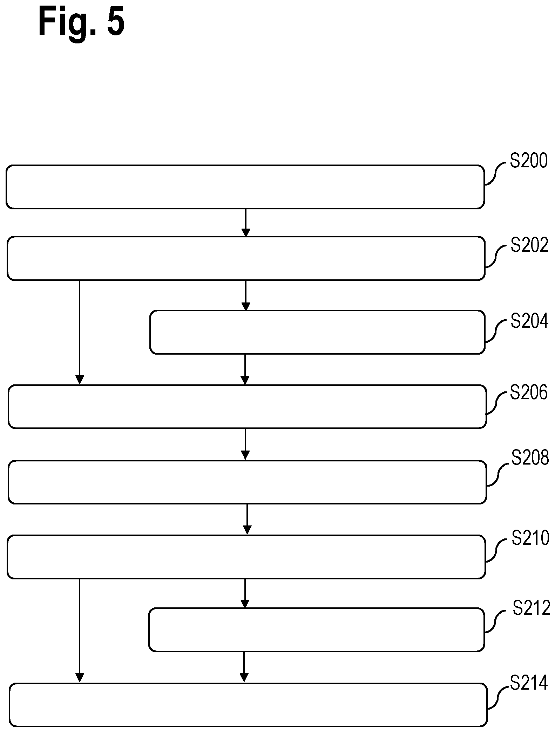

Preferably, the biological sample processing arrangement 300 is configured to carry out one of the methods according to Figs. 4 and 5.

Figure 4 is a flow chart of a method for imaging biological samples 110. The method starts in step S100. In step S102 the biological sample 110 is provided on the sample carrier 108. This step may include generating the biological sample 110, for example, from a biopsy. The biological sample 110 may be a tissue section cut from the biopsy sample by means of a microtome.

The step S102 may optionally further comprise contacting the biological sample 110 with at least one staining reagent in order to stain the biological sample 110. The staining reagent may specifically stain at least one biological structure of the biological sample 110. An example is the haematoxylin-eosin stain, during which the biological sample 110 is contacted with an aqueous haematoxylin solution and an aqueous Eosin Y solution. This specifically stains cell nuclei blue and cytoplasm and extracellular matrix pink. For contacting the biological sample 110 with the staining reagent, the biological sample 110 may be submerged in the staining reagent, together with the sample carrier 108 the biological sample 110 is arranged on. In particular, the staining device 304 may be configured to carry out the step S102.

In an optional subsequent step S104 the biological sample 110 may be contacted with a dehydration reagent. This may be required to remove water from the biological sample 110, for example as a step to conserve the biological sample 110. The dehydration reagent may in particular be required if the biological sample 110 was contacted with an aqueous staining reagent in step S102. The dehydration reagent is a water-miscible solvent, in particular a water-miscible organic solvent, preferably ethanol. The dehydration reagent may be contacted with the biological sample 110 in several subsequent dilutions with increasing concentrations of the dehydration reagent. For example, ethanol may be the dehydration reagent and initially applied to at a concentration of 75%, then a concentration of 95% may be applied, and a final concentration may be applied at essentially 100%. The step S104 may be skipped, in particular, if the biological sample 110 is not stained in step 5102. In particular, the staining device 304 may be configured to carry out the step S104.

In step S106 the biological sample 110 is contacted with the imaging reagent 106. The imaging reagent 106 is preferably a water-miscible solvent, in particular a water-miscible organic solvent. In case a staining reagent was used in step S104, the imaging reagent 106 is preferably miscible in the staining reagent. In a particularly preferred embodiment, the imaging reagent 106 is the dehydration reagent. The imaging reagent 106 may be ethanol, in particular at a concentration of essentially 100%. Thus, the imaging reagent 106 may be the last dilution applied during the staining in step S104. Alternatively, the imaging reagent 106 may be separate solution to any reagent previously in contact with the biological sample 110.

When contacting the biological sample 110 with the imaging reagent 106, the imaging reagent 106 may replace the dehydration reagent. For example, by transferring the sample carrier 108 from a container with the dehydration reagent to a container with the imaging reagent 106, the first reagent is replaced by the latter. This ensures that the biological sample 110 is in continuous contact with at least one of the reagents and cannot dry out.

In a next step S108 the biological sample 110 is imaged whilst it is in contact with the imaging reagent 106. In particular, the biological sample 110 continues to be submerged throughout the steps S106 and S108. This avoids the biological sample 110 drying during the imaging of the biological sample 110.

The biological sample 110 may be imaged by means of the imaging device 100, 200, for example a microscope. To that end, the imaging device 100, 200 may comprise the liquid container 104 filled with the imaging reagent 106 and in which at least the focus plane of the optical system 102 is arranged. A corresponding imaging plane of the optical system 102 may be arranged on a detector surface in order to image the biological sample arranged in the focus plane. Preferably, at least the space between the front lens 114 and the biological sample 110 is filled with the imaging reagent 106.

The imaging reagent 106 preferably has a refractive index that is similar to the refractive index of at least a front lens 114 of the optical system 102. This enables reducing aberrations when imaging the biological sample 110.

Ethanol is a particularly preferred imaging reagent 106 since it evaporates quickly once removed and leaves no residue on the imaging device 100, 200, in particular, the optical system 102.

In particular, the imaging device 100, 200 may be configured to carry out the steps S106 and S108.

In a step S110 the biological sample 110 is contacted with a washing reagent. The washing reagent is preferably miscible in the imaging reagent 106. In particular, the washing reagent is an aromatic hydrocarbon. For example, the washing reagent comprises xylene.

When contacting the biological sample 110 with the washing reagent, the washing reagent may replace the imaging reagent 106. For example, by transferring the sample carrier 108 from a container with the imaging reagent 106 to a container with the washing reagent, the first reagent is replaced by the latter. This ensures that the biological sample 110 is in continuous contact with at least one of the reagents and cannot dry out.

In a subsequent step S112 the biological sample 110 is contacted with a mounting reagent. The mounting reagent ensures that the biological sample 110 is conserved for long-term storage. For example, the mounting reagent may cure or set into a hardened medium for permanent storage of the biological sample 110.

Preferably, the mounting reagent is miscible in the washing reagent. The mounting reagent may be hydrocarbon based. For example, the mounting reagent may comprise xylene.

When contacting the biological sample 110 with the mounting reagent, the mounting reagent may replace the washing reagent. For example, by transferring the sample carrier 108 from a container with the washing reagent to a container with the mounting reagent, the first reagent is replaced by the latter. This ensures that the biological sample 110 is in continuous contact with at least one of the reagents and cannot dry out.

In an optional step S114 the biological sample 110 is covered on the sample carrier 108 with a cover element. The cover element may be a cover glass, for example. The cover element is placed on the biological sample 110 with the mounting reagent still in contact with the biological sample 110. This ensures that the biological sample 110 is surrounded with the mounting reagent between the cover element and the sample carrier 108.

In addition, the step S114 may include waiting for a specified time in order for the mounting reagent to cure or set. The curing or setting of the mounting reagent often requires two days.

In particular, the covering device 302 may be configured to carry out the steps S112, S114.

The method ends in step S116.

In between the steps S102 to S114, the biological sample 110 is preferably always in contact with a reagent, in particular, with the liquid reagent of the respective previous step. For example, the sample carrier 108 with the biological sample 110 may be transferred by the transfer container 306 whilst maintaining contact with one of the reagents 106. This avoids drying of the biological sample 110.

Figure 5 is a flow chart of a method for imaging biological samples 110 according to a further embodiment. The method starts in step S200.

In step S202 the biological sample 110 is provided on the sample carrier 108. This step may include generating the biological sample 110, for example, from a biopsy. The biological sample 110 may be a tissue section cut from the biopsy sample by means of a microtome.

The step S202 may optionally further comprise contacting the biological sample 110 with at least one staining reagent in order to stain the biological sample 110. The staining reagent may specifically stain at least one biological structure of the biological sample 110. An example is the haematoxylin-eosin stain, during which the biological sample 110 is contacted with an aqueous haematoxylin solution and an aqueous Eosin Y solution. This specifically stains cell nuclei blue and cytoplasm and extracellular matrix pink. For contacting the biological sample 110 with the staining reagent, the biological sample 110 may be submerged in the staining reagent, together with the sample carrier 108 the biological sample 110 is arranged on.

In a subsequent step S204 the biological sample 110 may be contacted with a dehydration reagent. This may be required to remove water from the biological sample 110, for example as a step to conserve the biological sample 110. The dehydration reagent may in particular be required if the biological sample 110 was contacted with an aqueous staining reagent in step S202. The dehydration reagent is a water-miscible solvent, in particular a water-miscible organic solvent, preferably ethanol. The dehydration reagent may be contacted with the biological sample 110 in several subsequent dilutions with increasing concentrations of the dehydration reagent. For example, ethanol may be the dehydration reagent and initially applied to at a concentration of 75%, then a concentration of 95% may be applied, and a final concentration may be applied at essentially 100%.

In particular, the staining device 304 may be configured to carry out the steps S202, S204.

In step S206 the biological sample 110 is contacted with the imaging reagent 106. In contrast to the method according to Fig. 1, the imaging reagent 106 used in step S206 is preferably an aromatic hydrocarbon. The imaging reagent 106 further is preferably miscible in the dehydration reagent. In particular, the imaging reagent 106 may be xylene based.

When contacting the biological sample 110 with the imaging reagent 106, the imaging reagent 106 may replace the dehydration reagent. For example, by transferring the sample carrier 108 from a container with the dehydration reagent to a container with the imaging reagent 106, the first reagent is replaced by the latter. This ensures that the biological sample 110 is in continuous contact with at least one of the reagents and cannot dry out.

In a next step S208 the biological sample 110 is imaged whilst it is in contact with the imaging reagent 106. In particular, the biological sample 110 continues to be submerged throughout the steps S206 and 5208. This avoids the biological sample 110 drying during the imaging of the biological sample 110.

The biological sample 110 may be imaged by means of the imaging device 100, 200, for example a microscope. To that end, the imaging device 100, 200 may comprise the liquid container 104 filled with the imaging reagent 106 and in which at least a focus plane of the optical system 102 is arranged. A corresponding imaging plane of the optical system 102 may be arranged on a detector surface in order to image the biological sample 110 arranged in the focus plane. Preferably, at least the space between the front lens 114 and the biological sample 110 is filled with the imaging reagent 106.

The imaging reagent 106 preferably has a refractive index that is similar to the refractive index of at least a material of the front lens 114 of the optical system 102. This enables reducing aberrations when imaging the biological sample 110.

In particular, the imaging device 100, 200 may be configured to carry out the steps S206, S208.

In a subsequent step S210 the biological sample 110 is contacted with a mounting reagent. The mounting reagent ensures that the biological sample 110 is conserved for long-term storage. For example, the mounting reagent may cure or set into a hardened medium for permanent storage of the biological sample 110.

Preferably, the mounting reagent is miscible in the imaging reagent 106. The mounting reagent may be hydrocarbon based. For example, the mounting reagent may comprise xylene.

When contacting the biological sample 110 with the mounting reagent, the mounting reagent may replace the imaging reagent 106. For example, by transferring the sample carrier 108 from a container with the imaging reagent 106 to a container with the mounting reagent, the first reagent is replaced by the latter. This ensures that the biological sample 110 is in continuous contact with at least one of the reagents and cannot dry out.

In an optional step S212 the biological sample 110 is covered on the sample carrier 106 with a cover element. The cover element may be a cover glass, for example. The cover element is placed on the biological sample 110 with the mounting reagent still in contact with the biological sample 110. This ensures that the biological sample 110 is surrounded with the mounting reagent between the cover element and the sample carrier 108.

In addition, the step S212 may include waiting for a specified time in order for the mounting reagent to cure or set. The curing or setting of the mounting reagent often requires two days.

In particular, the covering device 302 may be configured to carry out the steps S210, S212.

The method ends in step S214.

In between the steps S202 to S212, the biological sample is preferably always in contact with a reagent, in particular, with the liquid reagent of the respective previous step. This avoids drying of the biological sample. For example, the sample carrier 108 with the biological sample 110 may be transferred by the transfer container 306 whilst maintaining contact with one of the reagents 106. This avoids drying of the biological sample 110.

### Reference signs

- 100, 200: Imaging device
- 102: Optical system
- 104: Liquid container
- 106: Imaging reagent
- 108: Sample carrier
- 110: Biological sample
- 112: Objective
- 114: Front lens
- 116: Opening of liquid container
- 118: Surface of liquid in liquid container
- 120: Outlet
- 300: Biological sample processing arrangement
- 302: Covering device
- 304: Staining device
- 306: Transfer container

## Claims

1. An imaging device (100, 200) for imaging biological samples (110), comprising
an optical system (102) for imaging a biological sample (110) arranged on a sample carrier (108),
a liquid container (104) at least partially filled with an imaging reagent (106),
wherein a focus plane of the optical system (102) is arranged in the liquid container (104).

2. The imaging device according to claim 1, wherein the optical system (102) is at least partially arranged in the liquid container (104).

3. The imaging device according to one of the preceding claims, wherein the focus plane is arranged essentially parallel to a surface (118) of the imaging reagent (106) in the liquid container (104).

4. The imaging device according to one of the preceding claims 1 to 2, wherein the focus plane is arranged essentially perpendicular to a surface (118) of the imaging reagent (106) in the liquid container (114).

5. The imaging device according to one of the preceding claims, wherein the liquid container (104) has an opening (116) for receiving the sample carrier (108) with the biological sample (110).

6. The imaging device according to one of the preceding claims, wherein the liquid container (104) comprises an outlet (120) for draining the imaging reagent (106) from the liquid container (104).

7. The imaging device according to one of the preceding claims, wherein the optical system (102) has a magnification in a range of five to a hundred times.

8. The imaging device according to one of the preceding claims, wherein the optical system (102) is configured to move the focus plane relative to the sample carrier (108).

9. The imaging device according to one of the preceding claims, comprising an alignment element configured to move the sample carrier (108) relative to the focus plane.

10. A biological sample processing arrangement (300) comprising:
the imaging device (100, 200) according to one of the preceding claims configured to image a biological sample (110) arranged on a sample carrier (108), and
a covering device (302) for covering the biological sample (110) on the sample carrier (108) with a covering element, and
wherein the covering device (302) is configured to receive the sample carrier (108) with the biological sample (110) from the imaging device (100, 200).

11. The biological sample processing arrangement according to claim 10, further comprising a staining device (304) for staining the biological sample (110).

12. The biological sample processing arrangement according to claim 11, wherein the imaging device (100, 200) is configured to receive the sample carrier (108) with the biological sample (110) from the staining device (304).

13. The biological sample processing arrangement according to one of the preceding claims, 10 to 12, wherein at least the imaging device (100, 200) and the covering device (302) are configured to transfer a transfer container (306) between each other.

14. The biological sample processing arrangement according to claim 13, further comprising the transfer container (306).
